# EUROPEAN PATENT APPLICATION

(11) **EP 3 879 317 A1**
(43) Date of publication of application: **15.09.2021**
(21) Application number: 20163092.8
(22) Date of filing: 13.03.2020
(51) Int. Cl.: G02B 6/06, G02B 26/08, G02B 27/18, G03B 21/00, G03B 21/10, G03B 21/12, G03B 21/28

(54) **IMAGE PROJECTOR HAVING AN OPTICAL CONDUIT**

(71) Applicant: Bayerische Motoren Werke Aktiengesellschaft, 80809 München (DE)
(72) Inventor: Eichhorn, Julian, Menlo Park, CA California 94025 (US)

(57) **Abstract**

An image projector may include a picture generating unit, a fiber optic conduit, and an optic system. The picture generation unit is configured to generate and project an optical image. The fiber optic conduit is coupled to the picture generating unit for transporting the optical image. The optical image enters into one end of the fiber optic conduit and exits through the other end of the fiber optic conduit. The optic system is provided on an outlet side of the fiber optic conduit for projecting the optical image output from the fiber optic conduit to a projection surface. The image projector may be installed in a vehicle.

## Description

### Field

Examples relate to an image projector, more particularly an image projector having an optical conduit.

### Background

An image projector is an optical device that projects an image onto a surface or screen. A conventional image projection system is relatively large in size if a decent brightness and/or resolution is needed. In the place where the image projectors are mounted (e.g. in a roof liner, in a roof console, or on a gimbal head) there is hardly any package space for such large projectors. In addition, it is also difficult to move a large projector on a compact servo gimbal.

### Summary

Examples relate to an image projector. The image projector may include a picture generating unit, a fiber optic conduit, and an optic system. The picture generating unit is configured to generate and project an optical image. The optical image may be a still image or a moving image. The fiber optic conduit is coupled to the picture generating unit for transporting the optical image. The picture generating unit may be one of a digital light processor (DLP) projector, a liquid crystal on silicon (LCOS) display, a liquid crystal display (LCD) display, an organic light emitting diode (OLED) display, or a micro light emitting diode (LED) display. In another example, the picture generating unit may be a laser beam scanning projector.

The optical image enters into one end of the fiber optic conduit and exits through the other end of the fiber optic conduit. The optical system may be provided on an outlet side of the fiber optic conduit for projecting the optical image output from the fiber optic conduit to a projection surface. Another optical system may be provided on an outlet side of the fiber optic conduit. The optical image may be injected into the fiber optic conduit via a converging lens. Alternatively, the fiber optic conduit may be attached to the LCD display, the OLED display, or the micro LED display. The optic system may include an optical screen on at least one end of the fiber conduit. The optical screen may be a glass plate having a satin finish or a matte finish on one side.

Another example relates to a method for projecting an image. The method includes a step of generating an optical image with a picture generation unit, a step of transporting the optical image with a fiber optic conduit, and a step of projecting the optical image to a projection surface. The picture generation unit may be installed in a vehicle and the optical image may be transported into a vehicle cabin.

### Brief description of the Figures

Some examples of apparatuses and/or methods will be described in the following by way of example only, and with reference to the accompanying figures, in which
Fig. 1 shows an image projector having an optical conduit in accordance with one example;
Fig. 2 shows an image projector having an optical conduit in accordance with one example;
Fig. 3 shows an image projector having an optical conduit in accordance with another example;
Fig. 4 shows an image projector having an optical conduit in accordance with another example;
Fig. 5 shows an image projector having an optical conduit in accordance with examples;
Fig. 6 shows an example that the image projector with an optical conduit is installed in a vehicle; and
Fig. 7 is a flow diagram of an example method for projecting an image.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In accordance with examples disclosed herein, a fiber optic conduit is mounted to an outlet of an image projector. An image generated by the image projector is transported to a remote place via the fiber optic conduit. At the end of the fiber optic conduit, an optic system is installed to project the light to a projection surface. In accordance with the examples, the image projector, which can be large in size, may be installed in a remote place and the generated image can be transported to a place that the image projection is needed through the fiber optic conduit. With this scheme, the image projector may be installed in any place without space restriction.

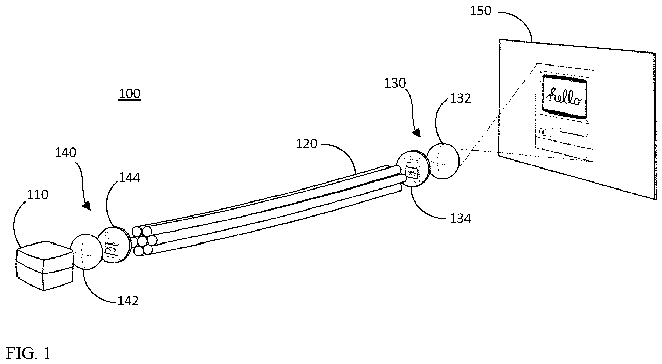

Fig. 1 shows an image projector 100 having an optical conduit in accordance with one example. The image projector 100 includes a picture generation unit 110, a fiber optic conduit 120, and an optic system 130 on an outlet side of the fiber optic conduit 120. An optic system 140 may be provided on an inlet side of the fiber optic conduit 120.

The picture generation unit 110 is a device for generating and projecting an optical image. The picture generation unit 110 is an image projector that projects an optical image. The optical image may be a still image or a moving image. For example, the picture generation unit 110 may be a digital light processor (DLP) display, a liquid crystal on silicon (LCOS) display, a liquid crystal display (LCD) display, an organic light emitting diode (OLED) display, a micro light emitting diode (LED) display, a laser beam scanning projector, or the like. A DLP chip is a reflective surface made up of tiny mirrors. Each mirror represents a single pixel. In a DLP projector, light from a light source is directed onto the surface of the DLP chip and the mirrors direct lights either into the lens path to turn the pixel on, or away from the lens path to turn the pixel off. An LCOS display is a display using a liquid crystal layer on top of a silicon backplane. An LCOS projector combines the reflective technology of DLP but blocks light using crystals, similar to LCD. A micro LED display is a type of flat panel display. A micro LED display comprises arrays of microscopic LEDs forming individual pixel elements. A laser beam scanning projector uses color laser beams to project video images. The laser beams are scanned through lines to project images. In addition to the listed types of projectors, any other conventional image display may be used as the picture generation unit 110.

The fiber optic conduit 120 is coupled to the picture generation unit 110. The picture generation unit 110 injects the generated optical image into the fiber optic conduit 120. The fiber optic conduit 120 is a light guide for transporting the light from the outlet of the picture generation unit 110 to a remote place. The fiber optic conduit 120 may comprise a bundle of optical fibers. The light injected into the core of an optical fiber remains trapped until emerging from the opposite end of the optical fiber. With the fiber optic conduit 120, light can be transported from one point to another with very little loss. The optical image generated by the picture generation unit 110 is injected into the fiber optic conduit 120 on one end (an inlet side) and projected from the fiber optic conduit 120 on the other end (an outlet side). The fiber optic conduit 120 is a high-resolution fiber optic image conduit. The number of optical fibers (the resolution) of the fiber optic conduit 120 may be equal to, or close to, the number of pixels (the resolution) of the display used for the picture generation unit 110.

The optic system 130 is provided at the outlet side of the fiber optic conduit 120. For example, the optic system 130 may include a converging lens 132 and the optical image from the outlet of the fiber optic conduit 120 is projected to a projection surface 150 (e.g. a projection screen) via the converging lens 132.

The optic system 130 may optionally further include an optical screen 134, on the outlet side of the fiber optic conduit 120. The optical screen 134 may emit the light into the converging lens 132 to project upon the projection surface 150. For example, the optical screen 134 may be a glass plate having a satin finish, a matte finish, or the like on one side. A piece of glass may be chemically treated or mechanically processed to generate a satin finish or a matte finish.

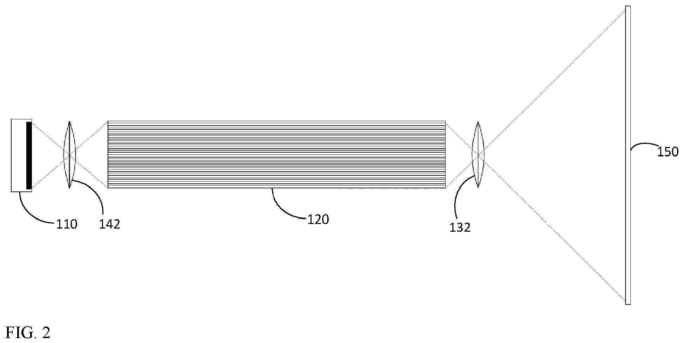

The optic system 140 may be provided on the inlet side of the fiber optic conduit 120, depending on the projection technology of the picture generation unit 110. Figs. 2-4 show some examples of the image projector with different types of projection technologies and with or without the optic system 140. The optic system 140 may include a lens 142 and/or an optical screen 144. The optical image generated by the picture generation unit 110 may be injected into the fiber optic conduit 120 via the lens 142. The optical screen 144 may be a glass plate having a satin finish, a matte finish, or the like on one side.

Fig. 2 shows an image projector having an optical conduit in accordance with one example. The image projector includes a picture generation unit 110, a fiber optic conduit 120, and converging lens 132, 142 on inlet and outlet sides of the fiber optic conduit 120. The picture generation unit 110 in this example may be a DLP display, an LCOS display, an LCD display, an OLED display, or a micro LED display. The converging lens 142 is provided on the inlet side of the fiber optic conduit 120 to inject the optical image from the picture generation unit 110 into the fiber optic conduit 120. The optical image is transported to a remote place by the fiber optic conduit 120 and projected through the outlet of the fiber optic conduit 120. On the outlet side of the fiber optic conduit 120, a converging lens 132 may be provided to project a light from the fiber optic conduit 120 onto a projection surface 150.

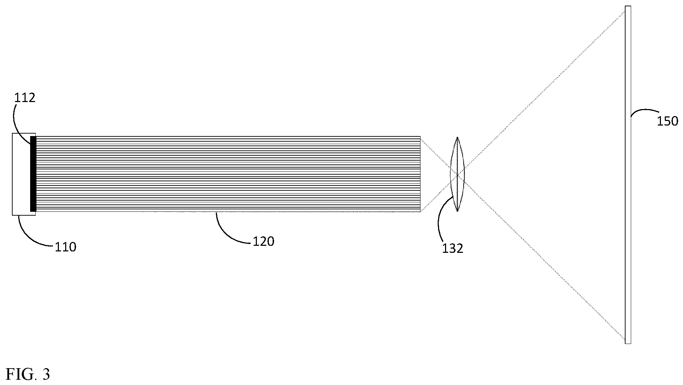

Fig. 3 shows an image projector having an optical conduit in accordance with another example. In this example, instead of injecting an optical image into the fiber optic conduit 120 using a lens (the lens 142 as shown in Fig. 2), the fiber optic conduit 120 may be optically attached to the screen 112 of the picture generation unit 110. The picture generation unit 110 in this example may be an LCD display, an OLED display, or a micro LED display. As shown in Fig. 3, the optical fibers with flat, smoothly cut or polished end may be directly attached onto the screen 112 of the LCD display, the OLED display, or the micro LED display. The optical image generated by the picture generation unit 110 is transported by the fiber optic conduit 120 and projected through the outlet of the fiber optic conduit 120. On the outlet side of the fiber optic conduit 120, a converging lens 132 may be provided to project a light from the fiber optic conduit 120 onto a projection surface 150.

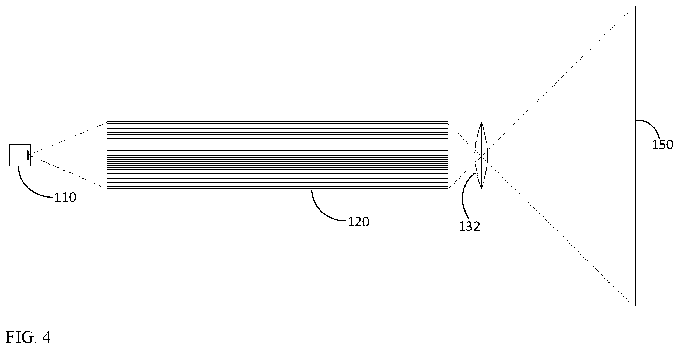

Fig. 4 shows an image projector having an optical conduit in accordance with another example. In this example, the picture generating unit 110 is a laser beam scanning projector. The laser beam scanning projector uses color laser beams to project video images. A laser beam(s) (a collimated light(s)) is scanned through lines to project images. With the laser beam scanning projector, the image may be directly injected into the fiber optic conduit 120 as shown in Fig. 4. The optical image is transported to a remote place by the fiber optic conduit 120 and projected through the outlet of the fiber optic conduit 120. On the outlet side of the fiber optic conduit 120, a converging lens 132 may be provided to project a light from the fiber optic conduit 120 onto a projection surface 150.

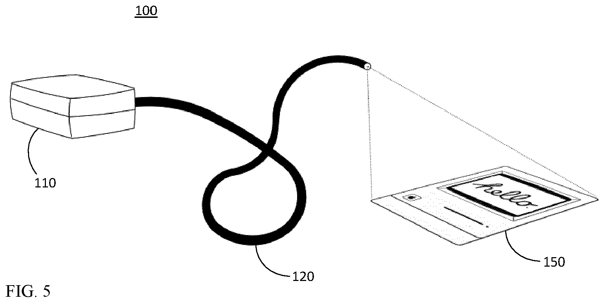

Fig. 5 shows an image projector 100 having an optical conduit 120 in accordance with examples. The fiber optic conduit 120 is mounted to the picture generation unit 110 such that the image generated by the picture generation unit 110 is transported to a remote place via the high-resolution fiber optic conduit 120 and projected onto the projection surface 150.

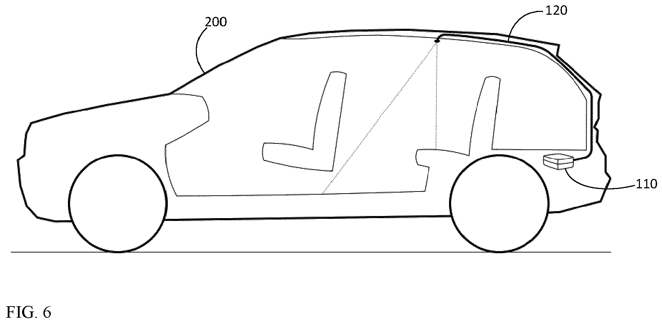

Fig. 6 shows an example that the image projector with an optical conduit is installed in a vehicle 200. The picture generation unit 110 may be installed in any place in a vehicle (e.g. in a trunk, under a seat, or in any compartment in a vehicle) and the image generated by the picture generation unit 110 may be transported via the fiber optic conduit 120 to any place in a vehicle (e.g. to a ceiling of the vehicle as shown in Fig. 6).

The projection system disclosed herein may be used for projection mapping, as an example. Projection mapping is a projection technique used to use objects (e.g. irregularly shaped objects) as a display surface for video projection. The picture generation unit 110 may be installed in a separate place and the image generated by the picture generation unit 110 can be transported via the fiber optic conduit 120 to any place it is needed.

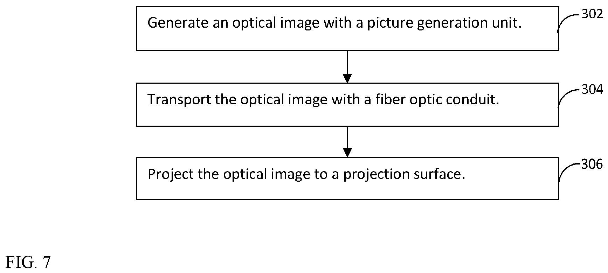

Fig. 7 is a flow diagram of an example method for projecting an image. An optical image is generated with a picture generation unit at step 302. The optical image is transported with a fiber optic conduit to a remote place at step 304. The optical image is then projected to a projection surface at step 306. The picture generation unit may be installed in a vehicle (e.g. in a trunk, etc.) and the optical image may be transported into a vehicle cabin.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. An image projector comprising:
a picture generating unit configured to project an optical image;
a fiber optic conduit coupled to the picture generating unit, wherein the optical image enters into one end of the fiber optic conduit and exits through the other end of the fiber optic conduit; and
an optical system provided on an outlet side of the fiber optic conduit for projecting the optical image output from the fiber optic conduit to a projection surface.

2. The image projector of claim 1, wherein the picture generating unit includes one of a digital light processor (DLP) projector, a liquid crystal on silicon (LCOS) display, a liquid crystal display (LCD) display, an organic light emitting diode (OLED) display, or a micro light emitting diode (LED) display.

3. The image projector of claim 2, wherein the optical image enters into the fiber optic conduit via a converging lens.

4. The image projector of claim 2, wherein the fiber optic conduit is attached to the LCD display, the OLED display, or the micro LED display.

5. The image projector of claim 1, wherein the picture generating unit is a laser beam scanning projector.

6. The image projector of claim 1, further comprising an optical screen on at least one end of the fiber conduit.

7. The image projector of claim 6, wherein the optical screen is a glass plate having a satin finish or a matte finish on one side.

8. The image projector of claim 1, wherein the optical system includes a lens.

9. The image projector of claim 8, wherein the optical system further includes an optical screen.

10. The image projector of claim 9, wherein the optical screen is a glass plate having a satin finish or a matte finish on one side.

11. The image projector of claim 1, wherein the image projector is installed in a vehicle.

12. The image projector of claim 1, wherein the image projector is installed on a gimbal.

13. A method for projecting an image comprising:
generating an optical image with a picture generation unit;
transporting the optical image with a fiber optic conduit; and
projecting the optical image to a projection surface.

14. The method of claim 13, wherein the picture generation unit is installed in a vehicle and the optical image is transported into a vehicle cabin.
